# EUROPÄISCHE PATENTANMELDUNG

(11) **EP 1 757 438 A1**
(43) Veröffentlichungstag der Anmeldung: **28.02.2007**
(21) Anmeldenummer: 05018545.3
(22) Anmeldetag: 26.08.2005
(51) Int. Cl.: B30B 9/32, B29B 17/00, B02C 19/00, B02C 18/14

(54) **Presse zum Verpressen von Verpackungsleergut**

(71) Anmelder: Mayer, Peter, 69112 Heidelberg (DE)
(72) Erfinder: Streib, Gerhard, Dipl.-Ing.,, 72160 Horb-Betra (DE)
(74) Vertreter: Meyer-Roedern, Giso

(57) **Zusammenfassung**

Die Presse hat zwei achsparallel angeordnete, verzahnte Walzen (14, 16), die mit ihren Verzahnungen in Eingriff stehen. Die eine Walze (14) ist in Drehung angetrieben. Die andere Walze (16) läuft mit. Die mitlaufende Walze (16) hat bezüglich der angetriebenen Walze (14) bei bestehendem Verzahnungseingriff winkelbegrenztes Drehspiel in der Größenordnung einiger Winkelgrade. Zu verpressendes Gut wird dem Zwikkel zwischen den Walzen (14, 16) zugeführt.

## Beschreibung

Die Erfindung betrifft eine Presse zum Verpressen von Verpackungsleergut, insbesondere Dosen und Kunststoff-Flaschen.

Aufgabe der Erfindung ist es, eine Presse zum Verpressen von Verpakkungsleergut zu schaffen, die kontinuierlich arbeitet und sich durch eine hohe Verpreßrate und einen verschleißarmen Betrieb auszeichnet.

Die diese Aufgabe lösende Presse hat zwei achsparallel angeordnete, verzahnte Walzen, die mit ihren Verzahnungen in Eingriff stehen. Eine Walze ist in Drehung angetrieben, und die andere Walze läuft mit. Die mitlaufende Walze hat bezüglich der angetriebenen Walze bei bestehendem Verzahnungseingriff winkelbegrenztes Drehspiel. Das zu verpressende Gut wird dem Zwickel zwischen den Walzen zugeführt.

Bei einer bevorzugten Ausführungsform beträgt das Drehspiel ein bis fünf Winkelgrade (1° bis 5°), vorzugsweise drei Winkelgrade (3°).

Bei einer bevorzugten Ausführungsform sind die Walzen baugleich und mit links-rechts vertauschten Enden angeordnet.

Bei einer bevorzugten Ausführungsform haben die Walzen eine außermittige Umfangsnut. Wenn steckengebliebenes Gut die Presse blockiert, wird ein Schaber in die Nuten eingeführt und das Gut ausgestoßen.

Bei einer bevorzugten Ausführungsform bestehen die Verzahnungen aus mehreren Reihen einzelner Zähne, die axial voneinander beabstandet sind und auf in Umfangsrichtung sich erstreckenden Zahnkränzen liegen.

Bei einer bevorzugten Ausführungsform sind die Zähne formgleich, und sie fluchten in axialer Richtung.

Bei einer bevorzugten Ausführungsform haben die Verzahnungen oder Zähne in Drehrichtung vorn steile, vorzugsweise wenigstens annähernd radiale Flanken. Dadurch wird das zu verpressende Gut von den Walzen sicher gegriffen.

Bei einer bevorzugten Ausführungsform wird der Presse das zu verpressende Gut von oben durch einen Trichter zugeführt.

Die erfindungsgemäße Presse läßt sich sehr einfach der gewünschten Kapazität entsprechend dimensionieren. Bei einer Presse mit nur einem Walzenpaar variiert man dazu die Länge der Walzen. In der Presse können aber auch zwei oder mehr Paare vorzugsweise baugleicher Walzen nebeneinander angeordnet sein.

Für eine mehrstufige Verpressung empfiehlt sich eine Übereinanderanordnung von wenigstens zwei Walzenpaaren mit parallelen Achsen, deren Zwickel in der Vertikalen ausgerichtet sind. Vorzugsweise haben die Walzen eines oberen Walzenpaares einen größeren Durchmesser als die Walzen eines unteren Walzenpaares. An den oberen Walzen erfolgt ein Vorverpressen auf ein mittleres Volumen, und an den unteren Walzen ein Nachverpressen auf ein kleines Volumen.

Der Handel fürchtet betrügerische Machenschaften derart, daß verpreßtes Verpackungsleergut zu einem Leergutrückgabeautomaten gebracht wird, um dort den Versuch zu unternehmen, neuerlich das Pfandrückgeld zu kassieren. Das zu verhindern, sollte ein Barcode (Strichcode) auf dem zu verpressenden Gut bei dem Verpressvorgang nach Möglichkeit unlesbar gemacht werden. Mit der erfindungsgemäßen Presse gelingt das zumeist. Erforderlichenfalls kann aber dem/den Walzenpaar(en) der Presse ein Zerkratzwerk nachgeordnet sein.

Bei einer bevorzugten Ausführungsform hat das Zerkratzwerk zwei nebeneinander angeordnete, in gegenläufiger Drehung angetriebene walzenförmige Drahtbürsten, deren Zwickel mit dem eines darüber angeordneten Walzenpaares in der Vertikalen ausgerichtet ist.

Bei einer bevorzugten Ausführungsform haben die Drahtbürsten einen kleineren Durchmesser als die Walzen. Die Drehzahl der Drahtbürsten ist wesentlich höher als die der Walzen.

Die erfindungsgemäße Presse hat eine bevorzugte Verwendung in einem Rückgabeautomaten für Verpackungsleergut. Schutzgegenstand ist auch ein solcher Rückgabeautomat, der mit der erfindungsgemäßen Presse ausgerüstet ist.

Die Erfindung wird im folgenden anhand eines in der Zeichnung dargestellten Ausführungsbeispiels näher erläutert. Es zeigen:

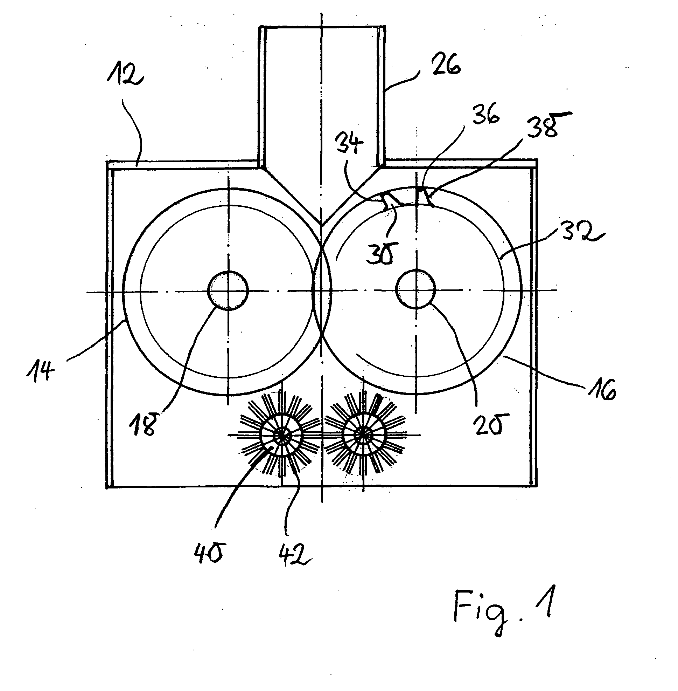

- Fig. 1: einen seitlichen Blick in das offene Gehäuse einer Presse;

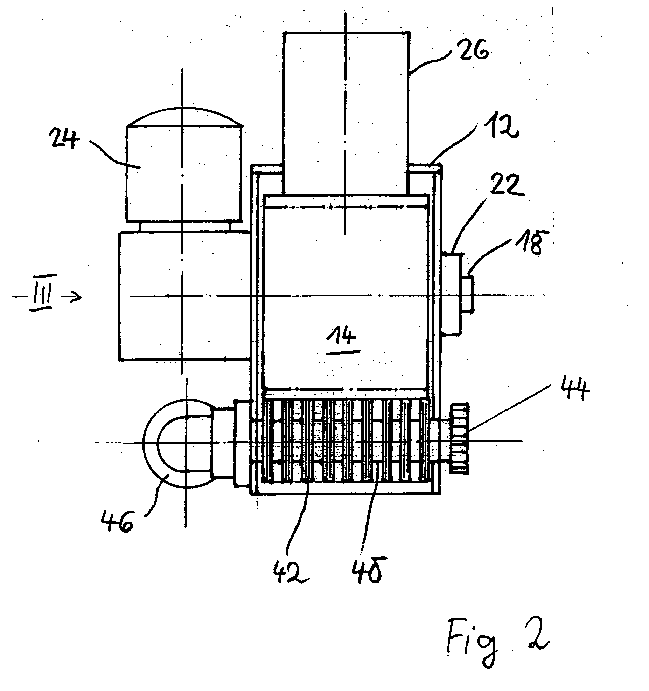

- Fig. 2: eine Vorderansicht der Presse; und

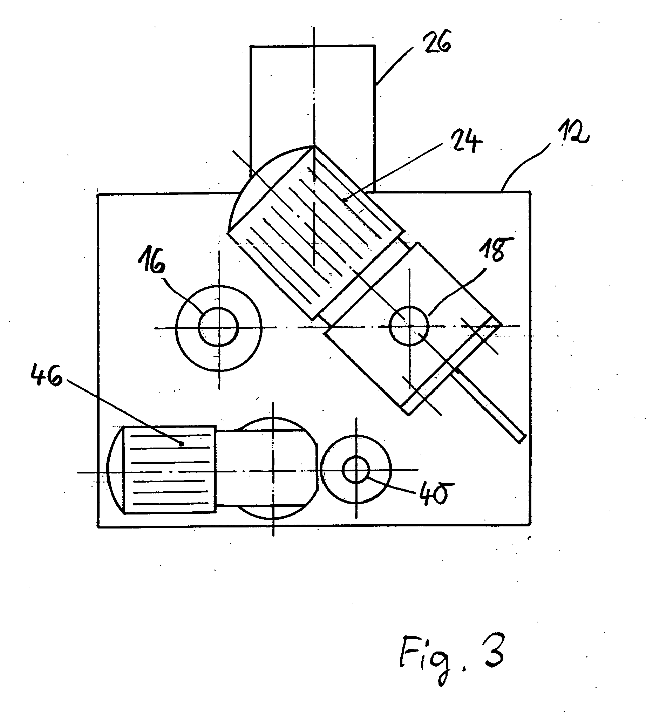

- Fig. 3: eine Seitenansicht der Presse mit Blick in III von Fig. 2.

Die Presse hat ein Gehäuse 12, in dem auf gleicher Höhe nebeneinander zwei verzahnte Walzen 14, 16 gelagert sind, die mit ihren Verzahnungen in Eingriff stehen. Die Walzen 14, 16 sind baugleich. Sie laufen mit links-rechts vertauschten Enden gegeneinander.

Die Walzen 14, 16 sitzen auf Wellen 18, 20, die in Lagerböcken 22 gelagert sind. Eine der Wellen 14 ist in Drehung angetrieben. Der elektrische Antriebsmotor 24 dafür ist seitlich an das Gehäuse 12 der Presse angebaut. Die andere Walze 16 wird durch den Verzahnungseingriff der Walzen 14, 16 in gegenläufiger Drehung mitgenommen. Die Drehzahl der Walzen 14, 16 beträgt ca. 23 Umdrehungen pro Minute.

Oberhalb des Zwickels der Walzen 14, 16 ist ein Trichter 26 angeordnet, durch den der Presse zu verpressendes Verpackungsleergut zugeführt wird. Das Gut fällt in den Zwickel. Es wird von den Verzahnungen der Walzen 14, 16 erfaßt, durch den Zwickel hindurchbefördert und dabei zwischen den Walzen 14, 16 verpreßt. Das verpreßte Gut fällt in dem Gehäuse 12 nach unten.

Die Verzahnungen der Walzen 14, 16 bestehen aus mehreren Reihen einzelner Zähne 30, die von dem Zylindermantel 32 der Walzen 14, 16 radial nach außen abstehen. Die Zähne 30 sind axial beabstandet. Sie liegen auf in Umfangsrichtung sich erstreckenden Zahnkränzen.

Die Zähne 30 sind untereinander formgleich. Sie fluchten in axialer Richtung.

Die Zähne 30 haben in Drehrichtung vorn steile, wenigstens annähernd radiale Flanken 34, platte Außenflächen 36 und entgegen der Drehrichtung abfallende, ebene hintere Flanken 38.

Der Eingriff der Verzahnungen ist nicht entfernt formschlüssig. Die nicht angetriebene Walze 16 wird zwar durch den Verzahnungseingriff in Drehung mitgenommen. Sie hat aber gegenüber der angetriebenen Walze 14 Drehspiel in der Größenordnung einiger Winkelgrade. Das ist für die Dosierung des Preßdrucks entscheidend. Je nach Widerstand, den das zu verpressende Gut entgegensetzt, weicht die nicht angetriebene Walze 16 in Umfangsrichtung aus, so daß die Durchtrittsbreite des Zwickels und der Preßdruck angepaßt werden.

Die Walzen haben eine außermittige Umfangsnut. Wenn steckengebliebenes Gut die Presse blockiert, kann ein Schaber in die Umfangsnuten eingeführt und das Gut damit ausgestoßen werden.

Unterhalb der Walzen 14, 16 befindet sich ein Zerkratzwerk mit zwei walzenförmigen Drahtbürsten, die baugleich und auf gleicher Höhe nebeneinander angeordnet sind. Der Zwickel der Drahtbürsten ist mit dem der Walzen 14, 16 in der Vertikalen ausgerichtet.

Die Drahtbürsten sind von kleinerem Durchmesser und gleicher axialer Länge wie die Walzen 14, 16. Ihre Wellenkörper 40 sind mit radial abstehenden Drahtborsten 42 bestückt, die axial gestaffelte Borstenkränze bilden. An den Wellenenden der Drahtbürsten befinden sich Zahnräder 44, die miteinander kämmen. Die Drahtbürsten sind mit einem elektrischen Antriebsmotor 46 in gegenläufiger Drehung angetrieben. Ihre Drehzahl beträgt ca. 400 Umdrehungen pro Minute.

Aus dem Zwickel der Walzen 14, 16 kommendes, verpreßtes Verpackungsleergut wird durch den Zwickel der schnellaufenden Drahtbürsten hindurchbefördert und von den Bürsten zerkratzt, so das ein nach dem Verpressen eventuell noch erkennbarer Barcode (Strichcode) unlesbar wird.

### Liste der Bezugszeichen

- 12: Gehäuse
- 14: angetriebene Walze
- 16: mitlaufende Walze
- 18: Welle von 14
- 20: Welle von 16
- 22: Lagerbock
- 24: Antriebsmotor
- 26: Trichter
- 30: Zahn
- 32: Zylindermantel
- 34: vordere Flanke
- 36: Außenfläche
- 38: hintere Flanke
- 40: Wellenkörper
- 42: Drahtborsten
- 44: Zahnrad
- 46: Antriebsmotor

## Patentansprüche

1. Presse zum Verpressen von Verpackungsleergut, insbesondere Dosen und Kunststoff-Flaschen, mit zwei achsparallel angeordneten, verzahnten Walzen (14, 16), die mit ihren Verzahnungen in Eingriff stehen, wobei die eine Walze (14) in Drehung angetrieben ist und die andere Walze (16) mitläuft, die mitlaufende Walze (16) bezüglich der angetriebenen Walze (14) bei bestehendem Verzahnungseingriff winkelbegrenztes Drehspiel hat und zu verpressendes Gut dem Zwickel zwischen den Walzen (14, 16) zuführbar ist.

2. Presse nach Anspruch 1, **dadurch gekennzeichnet, daß** das Drehspiel ein bis fünf Winkelgrade (1° bis 5°), vorzugsweise drei Winkelgrade (3°) beträgt.

3. Presse nach Anspruch 1 oder 2, **dadurch gekennzeichnet, daß** die Walzen (14, 16) baugleich und mit links-rechts vertauschten Enden angeordnet sind.

4. Presse nach einem der Ansprüche 1 bis 3, **dadurch gekennzeichnet, daß** die Walzen (14, 16) eine außermittige Umfangsnut haben.

5. Presse nach einem der Ansprüche 1 bis 4, **dadurch gekennzeichnet, daß** die Verzahnungen aus mehreren Reihen einzelner Zähne (30) bestehen, die axial voneinander beabstandet sind und auf in Umfangsrichtung sich erstreckenden Zahnkränzen liegen.

6. Presse nach Anspruch 5, **dadurch gekennzeichnet, daß** die Zähne (30) formgleich sind und in axialer Richtung fluchten.

7. Presse nach einem der Ansprüche 1 bis 6, **dadurch gekennzeichnet, daß** die Verzahnungen oder Zähne (30) in Drehrichtung vorn steile, vorzugsweise wenigstens annähernd radiale Flanken (34) haben.

8. Presse nach einem der Ansprüche 1 bis 7, **dadurch gekennzeichnet, daß** ihr zu verpressendes Gut von oben durch einen Trichter (26) zuführbar ist.

9. Presse nach einem der Ansprüche 1 bis 8, **gekennzeichnet durch** die Nebeneinanderanordnung von wenigstens zwei vorzugsweise baugleichen Walzenpaaren (14, 16).

10. Presse nach einem der Ansprüche 1 bis 9, **gekennzeichnet durch** die Übereinanderanordnung von wenigstens zwei Walzenpaaren (14, 16) mit parallelen Achsen, deren Zwickel in der Vertikalen ausgerichtet sind.

11. Presse nach Anspruch 10, **dadurch gekennzeichnet, daß** die Walzen eines oberen Walzenpaares (14, 16) einen größeren Durchmesser als die Walzen eines unteren Walzenpaares (14, 16) haben.

12. Presse nach einem der Ansprüche 1 bis 11, **dadurch gekennzeichnet, daß** dem/den Walzenpaar(en) (14, 16) ein Zerkratzwerk nachgeordnet ist.

13. Presse nach Anspruch 12, **dadurch gekennzeichnet, daß** das Zerkratzwerk zwei nebeneinander angeordnete, in gegenläufiger Drehung angetriebene walzenförmige Drahtbürsten hat, deren Zwickel mit dem eines darüber angeordneten Walzenpaares (14, 16) in der Vertikalen ausgerichtet ist.

14. Presse nach Anspruch 13, **dadurch gekennzeichnet, daß** die Drahtbürsten einen kleineren Durchmesser als die Walzen (14, 16) haben.

15. Presse nach Anspruch 13 oder 14, **dadurch gekennzeichnet, daß** die Drehzahl der Drahtbürsten wesentlich höher als die der Walzen (14, 16) ist.

16. Verwendung einer Presse nach einem der Ansprüche 1 bis 15 in einem Rückgabeautomaten für Verpackungsleergut.

17. Rückgabeautomat für Verpackungsleergut mit einer Presse nach einem der Ansprüche 1 bis 15.
